# EUROPEAN PATENT APPLICATION

(11) **EP 0 968 649 A1**
(43) Date of publication of application: **05.01.2000**
(21) Application number: 98401656.8
(22) Date of filing: 02.07.1998
(51) Int. Cl.: A01N 25/30

(54) **Adjuvants for novel dry herbicide formulations**

(71) Applicant: E.I. DU PONT DE NEMOURS AND COMPANY, Wilmington Delaware 19898 (US)
(72) Inventor: Claude, Jean-Pierre, 68980 Beblenheim (FR); Favier, Patrick, 68000 Colmar (FR); Gabard, Jérôme, 68125 Houssen 1 (FR); Green, Jerry M., Landenberg, PA 19350 (US); Huby, Jean-Pierre, 68170 Rixheim (FR); Thalinger, Pierre-Paul, 67600 Baldenheim (FR)
(74) Representative: Pochart, François

(57) **Abstract**

This invention pertains to dry formulations of certain fatty alcohol ethoxylated surfactants, which when used at relatively low concentrations, enhance the biological activity of agricultural herbicides.

## Description

### FIELD OF THE INVENTION

This invention pertains to surfactants that can enhance the biological activity of herbicide(s), at low doses. The surfactants and the herbicides are formulated in a solid dry form. A single formulation can be produced containing both the surfactant and the herbicide or they can be formulated separately and the two formulations mixed in the tank of the sprayer.

### BACKGROUND OF THE INVENTION

Herbicides are used to control unwanted plant vegetation and are widely recognized as essential components in the efficient production of food. Herbicides are valuable, but it is important to keep the herbicide rates low to minimize adverse environmental effects caused by, for instance, off-target movements or residues left in the crop or soil. When herbicides are applied to plant foliage, adjuvants are essential for allowing low herbicide doses to perform consistently (Roberts, J. R. (1992): A review of the methodology employed in the laboratory evaluation of spray adjuvants pp. 503-512 Foy, C. L. (Ed.) *Adjuvant for Agrichemicals*, CRC Press, Boca Raton.). These adjuvants can be added to the herbicide formulation or to the spray mixture. Adjuvants that increase biological activity include crop oil concentrates, surfactants, and inorganic salts or fertilizer. The oil in the crop oil concentrates can be vegetable oil, modified vegetable oil (usually esters or salts of fatty acids), or mineral (petroleum) oils. Adjuvants allow herbicides to be used at low rates and to control more species than if the herbicide was used alone. This effect is described by Green, J.M. and Green, J. H. (1993): *Weed Technology 7*:633-640.

Adjuvants are used at various dosages depending on adjuvant type and standard practices, which vary by location, weed, and environmental conditions. For example, use recommendations for crop oil concentrates most commonly range from 0.5% to 1% of the spray volume, with some label recommendations as high as 2%. When added to the spray mixture, surfactants are commonly used at 0.1 to 0.2% in Europe and up to 0.5% in the U.S. Most adjuvants are liquids or low melting solids that are incompatible with dry solid herbicide formulations and must be packaged separately for these formulations. In the U.S., ammonium fertilizers are commonly used as dry adjuvants to enhance herbicide activity at rates of two pounds per acre or concentrations of 2 to 4% w/v of spray volume. These quantities of ammonium fertilizer adjuvants normally are too large to formulate with low dosage dry herbicides, without diluting the concentration of the herbicide in the final product formulation to unacceptably low levels.

It would be useful if a specific adjuvant type or class could be identified that enhances herbicide activity at lower doses than current commercial adjuvants and could be formulated with the herbicide in a small volume as a dry form.

### SUMMARY OF THE INVENTION

This invention pertains to a dry herbicidal formulation, comprising one or more herbicides, one or more fatty alcohol ethoxylated compounds or salts thereof; and optionally one or more additives selected from the group consisting of: surfactants, safeners, oils. ammonium salts, drying agents, dispersants, wetting agents, anti-caking agents, anti-foaming agents, chemical stabilizers, and inert diluents. When this formulation is diluted with water in a spray tank the concentration of the one or more fatty alcohol ethoxylated compounds or salts thereof and any other adjuvant that enhances biological activity is about 0.01 to about 0.5% of the spray volume which is intended to be used at a rate from about 10 to about 500 liters/hectare.

This invention also teaches a water-soluble or water-dispersible herbicide formulation, comprising a water-soluble or water-dispersible herbicide granule composition which comprises one or more herbicides, and optionally one or more additives selected from the group consisting of: surfactants, safeners, drying agents, dispersants, wetting agents, anti-caking agents, anti-foaming agents, chemical stabilizers, and inert diluents; and a water-soluble or water-dispersible fatty alcohol ethoxylated surfactant granule composition which comprises one or more fatty alcohol ethxoylated compounds or salts thereof; and one or more additives selected from the group consisting of: surfactants, safeners, drying agents, dispersants, wetting agents, anti-caking agents, anti-foaming agents, chemical stabilizers, and inert diluents. When this formulation is diluted with water in a spray tank, the concentration of the one or more fatty alcohol ethoxylated compounds or salts thereof and any other adjuvant that enhances biological activity is about 0.01 to about 0.5% of the spray volume, which is intended to be used at a rate from about 10 to about 500 liters/ha.

A preferred formulation is one where the fatty alcohol ethoxylated surfactant compound or salts thereof is represented by the formula:

R-(OCH₂CH₂)ₓ-OH

where R is a linear or branched alkyl containing 8 to 26 carbon atoms and x is 6 to 50. A most preferred formulation where is one where R is a linear or branched alkyl containing 16 to 24 carbon atoms and x is 12 to 25.

Preferred is a formulation described above such that when the formulation is diluted with water in a spray tank, the concentration of the one or more fatty alcohol ethoxylated compounds or salts thereof and any other adjuvant that enhances biological activity is about 0.01 to about 0.09% of the spray volume.

Preferred is a formulation where the herbicide is a sulfonylurea, a porphyrin biosynthesis inhibitor, a 4-hydroxyphenyl-pyruvate-dioxygenase inhibitor, a phosphonic acid or its salt or a mixture of one or more of the foregoing.
More preferred is the formulation where the herbicide is selected from the group consisting of: rimsulfuron, thifensulfuron methyl, nicosulfuron, (2,3-dihydro-5,8-dimethyl-1,1-dioxidospiro[4*H*-1-benzothiopyran-4,2'-[1,3]dioxolan]-6-yl)(1-ethyl-5-hydroxy-1*H*-pyrazol-4-yl)methanone sodium salt, 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium, (6*S-cis*)-1-chloro-*N*-[2-chloro-4-fluoro-5-(6-fluorotetrahydro-1,3-dioxo-1*H*-pyrrolo[1,2-*c*]imidazol-2(3*H*-yl)phenyl]methanesulfonamide, metsulfuron methyl, tribenuron methyl, flupyrsulfuron methyl, quizalofop-ethyl, and glyphosate acid and its various salts; and mixtures thereof.

This invention also teaches a method for controlling the growth of undesired vegetation, which comprises adding the formulation(s) described above to water and applying to the locus to be protected an effective amount of the dispersed formulation in water.

### DETAILS OF THE INVENTION

This invention pertains to formulations of adjuvants for enhancing biological activity of agricultural herbicides. A single formulation can be produced containing both the surfactant(s) and the herbicide(s) with other ingredients, or they can be formulated separately and the two formulations mixed in the tank of the sprayer.

It has been found that the fatty alcohol ethoxylated surfactants provide a high unit activity to agricultural herbicides compared to the same agricultural herbicides applied alone. Certain of these surfactants surprisingly provide the enhanced biological effect at use rates lower than is generally needed with common surfactants. These surfactants are particularly useful in solid types of formulations.

This invention also teaches a method for controlling the growth of undesired vegetation, which comprises adding the formulation disclosed herein to water and applying to the locus to be protected an effective amount of the dispersed formulation in water.

Adjuvants are commonly used at various dosages depending on adjuvant type and standard practices, which vary by location, weed, and environmental condition. For example, use recommendations for crop oil concentrates most commonly range from 0.5% to 1% of the spray volume, with some label recommendations as high as 2%. When added to the spray mixture, surfactants are commonly used at 0.1% to 0.2 % in Europe and up to 0.5% in the U.S. These high volumes make it inconvenient or impractical to include or package the adjuvant with the herbicide formulation. One purpose of the present invention is to teach a class of adjuvants which enhance herbicide activity at lower doses than current commercial adjuvants and can therefore be more conveniently formulated or packaged with the herbicide. The small volume is a desirable enhancement due to the reduced storage and transport costs, ease of handling, and lower packaging and package disposal costs.

Another purpose of the present invention is to teach a class of adjuvants which enhance herbicide activity and can be formulated or packaged with the herbicide as a dry form. Farmers prefer the dry product form for its case of use, reduced problems in spill clean up, its light weight, and because a dry form, for many products, is more chemically stable.

Most available adjuvants are liquids or low melting solids that are incompatible with dry solid herbicide formulations and must therefore be packaged, measured, and added to the spray tank separately. Users find that packaging the adjuvant and the herbicide together is an advantage since only one product must be handled and there is no doubt about product compatibility or mixing order in the spray tank.

A preferred form of the invention is a formulation comprising one or more herbicides, one or more fatty alcohol ethoxylated surfactants compounds or salts thereof, and optionally one or more additives selected from the group consisting of surfactants, safeners, drying agents, dispersants, wetting agents, anti-caking agents, anti-foaming agents, chemical stabilizers, and inert diluents, wherein when the formulation is diluted with water in a spray tank the concentration of the one or more fatty alcohol ethoxylated surfactants thereof and any surfactant additive is about 0.01 to about 0.5% of the spray volume or weight.

Another preferred form of the invention is a mixture of two granules comprising:
a) water-soluble or water-dispersible herbicide granule composition which comprises one or more herbicides, and optionally one or more additives selected from the group consisting of: surfactants, safeners, drying agents, dispersants, wetting agents, anti-caking agents, anti-foaming agents, chemical stabilizers, and inert diluents; and
b) a water-soluble or water-dispersible granule composition which comprises one or more fatty alcohol ethoxylated compounds or salts thereof; and one or more additives selected from the group consisting of: surfactants, safeners, drying agents, dispersants, wetting agents, anti-caking agents, anti-foaming agents, chemical stabilizers, and inert diluents; wherein when the formulation is diluted with water in a spray tank the concentration of the one or more fatty alcohol ethoxylated compounds or salts thereof and any surfactant additive is about 0.01 to about 0.5% of the spray volume.

The preferred surfactants are broadly described in the formula:

R-(OCH₂CH₂)ₓ-OH

where R is a linear or branched alkyl containing 8 to 26 carbon atoms and x is 6 to 50. A most preferred formulation where is one where R is a linear or branched alkyl containing 16 to 24 carbon atoms and x is 12 to 25.

Most preferred surfactants are for instance: Brij® 78, Unithox® 360, Empilan® KM20 and KM25, as well as Mergital® ST30, and Atlas® G4940. Especially preferred is a urea-clathrate surfactant, such as: SCS4825, SCS4822, SCS5053, SCS5045, and SCS4707 supplied by ICI.

It will be recognized by one skilled in the art that the desired effect of enhancement of herbicide activity may be obtained by use of one of these fatty alcohol ethoxylated surfactants, by a combination of one or more these fatty alcoholethoxylated surfactants, or by a combination of said these fatty alcohol ethoxylated surfactants with one or more other adjuvants known to enhance herbicidal activity. Adjuvants include, but are not limited to, surfactants, vegetable oils, modified vegetable oils, crop oil concentrates and ammonium fertilizers.

The preferred herbicides include but are not limited to: acetochlor, acifluorfen and its sodium salt, aclonifen, acrolein (2-propenal), alachlor, ametryn, amidosulfuron, amitrole, ammonium sulfamate, anilofos, asulam, atrazine, azafenidin, azimsulfuron, benazolin, benazolin-ethyl, benfluralin, benfuresate, bensulfuron-methyl, bensulide, bentazone, bifenox, bispyribac and its sodium salt, bromacil, bromoxynil, bromoxynil octanoate, butachlor, butralin, butroxydim, butylate, caloxydim (BAS 620H), carfentrazone-ethyl, chlomethoxyfen, chloramben, chlorbromuron, chloridazon, chlorimuron-ethyl, chlornitrofen, chlorotoluron, chlorpropham, chlorsulfuron, chlorthal-dimethyl, cinosulfuron, clethodim, clomazone, clopyralid, clopyralid-olamine, cumyluron, cyanazine, cycloate, cyclosulfamuron, 2,4-D and its butotyl, butyl, isoctyl and isopropyl esters and its dimethylammonium, diolamine and trolamine salts, daimuron, dalapon, dalapon-sodium, dazomet, 2,4-DB and its dimethylammonium, potassium and sodium salts, desmedipham, desmetryn, dicamba and its diglycolammonium, dimethylammonium, potassium and sodium salts, dichlobenil, dichlorprop, diclofop-methyl, 2-[4,5-dihydro-4-methyl-4-(1-methylethyl)-5-oxo-1*H*-imidazol-2-yl]-5-methyl-3-pyridinecarboxylic acid (AC 263,222), difenopentenethyl, difenzoquat metilsulfate, diflufenican, dimepiperate, dimethenamid, dimethylarsinic acid and its sodium salt, dinitramine, diphenamid, diquat dibromide, dithiopyr, diuron, DNOC, endothal, EPTC, esprocarb, ethalfluralin, ethametsulfuron-methyl, ethofumesate, ethoxyfen-ethyl, ethoxysulfuron, fenoxaprop-ethyl, fenoxaprop-P-ethyl, fenuron, fenuron-TCA, flamprop-methyl, flamprop-M-isopropyl, flamprop-M-methyl, flazasulfuron, fluazifop-butyl, fluazifop-P-butyl, fluchloralin, flumetsulam, flumiclorac-pentyl, flumioxazin, flumipropyn, fluometuron, fluoroglycofen-ethyl, flupoxam, flupropacil, flupyrsulfuron-methyl and its sodium salt, fluridone, flurochloridone, fluroxypyr, fluthiacet-methyl, fomesafen, fosamine-ammonium, glufosinate, glufosinate-ammonium, glyphosate, glyphosate-isopropylammonium, glyphosate-sesquisodium, glyphosate-trimesium, halosulfuron-methyl, haloxyfop-etotyl, haloxyfop-methyl, hexazinone, hydantocidin imazamethabenz-methyl, imazamox, imazapyr, imazaquin, imazaquin-ammonium, imazethapyr, imazethapyr-ammonium, imazosulfuron, ioxynil, ioxynil octanoate, ioxynil-sodium, isoproturon, isouron, isoxaben, isoxaflutole, isoxapyrifop, lactofen, lenacil, linuron, maleic hydrazide, MCPA and its dimethylammonium, potassium and sodium salts, MCPA-isoctyl, mecoprop, mecoprop-P, mefenacet, mefluidide, metam-sodium, methabenzthiazuron, methylarsonic acid and its calcium, monoammonium, monosodium and disodium salts, methyl [[[1-[5-(2-chloro-4-(trifluoromethyl)phenoxy]-2-nitrophenyl]-2-methoxyethylidene]amino]oxy]acetate (AKH-7088), methyl 5-[[[[(4,6-dimethyl-2-pyrimidinyl)amino]carbonyl]amino]sulfonyl]-1-(2-pyridinyl)-1*H*-pyrazole-4-carboxylate, metobenzuron, metolachlor, metosulam, metoxuron, metribuzin, metsulfuron-methyl, molinate, monolinuron, napropamide, naptalam, neburon, nicosulfuron, norflurazon, oryzalin, oxadiazon, oxasulfuron, oxyfluorfen, paraquat dichloride, pebulate, pendimethalin, pentoxazone (KPP-314), perfluidone, phenmedipham, picloram, picloram-potassium, pretilachlor, primisulfuron-methyl, prometon, prometryn, propachlor, propanil, propaquizafop, propazine, propham, propyzamide, prosulfuron, pyraflufen-ethyl, pyrazolynate, pyrazoxyfen, pyrazosulfuron-ethyl, pyridate, pyriminobac-methyl, pyrithiobac, pyrithiobac-sodium, quinclorac, quizalofop-ethyl, quizalofop-P-ethyl, quizalofop-P-tefuryl, rimsulfuron, sethoxydim, siduron, simazine, sulcotrione, sulfentrazone, sulfometuron-methyl, TCA, TCA-sodium, tebuthiuron, terbacil, terbuthylazine, terbutryn, thenylchlor, thiafluamide, thidiazimin, thifensulfuron-methyl, thiobencarb, tralkoxydim, tri-allate, triasulfuron, triaziflam, triazofenamide, tribenuron-methyl, triclopyr, triclopyr-butotyl, triclopyr-triethylammonium, triflusulfuron-methyl, and vernolate.

The preferred herbicides also include: 3-[4-chloro-2-fluoro-5-[(1-methyl-2-propynyl)oxy]phenyl]-5-(1-methylethylidene)-2,4-oxazolidinedione; *N*-(4-fluorophenyl)-*N*-(1-methylethyl)-2-[[5-(trifluoromethyl)-1,3,4-thiadiazol-2-yl]oxy]acetamide; *N*-[2-(3,5-dimethylphenoxy)-1-methylethyl]-6-(1-fluoro-1-methylethyl)-1,3,5-triazine-2,4-diamine; 3-[1-(3,5-dichlorophenyl)-1-methylethyl]-2,3-dihydro-6-methyl-5-phenyl-4*H*-1,3-oxazin-4-one; 1-methylethyl 5-[4-bromo-1-methyl-5-(trifluoromethyl)-1*H*-pyrazol-3-yl]-2-chloro-4-fluorobenzoate; 2-[4-(methylsulfonyl)-2-nitrobenzoyl]-3-hydroxy-2-cyclohexen-1-one; *cis*-4-ethyl-3-(3-fluorophenyl)-1-(3-(trifluoromethyl)phenyl]-2-pyrrolidinone; 4-(2-chlorophenyl)-*N*-cyclohexyl-*N*-ethyl-4,5-dihydro-5-oxo-1*H*-tetrazole-1-carboxamide; *N*-(2,6-dichlorophenyl)-5-exhoxy-7-fluoro-[1,2,4]triazolo(1,5-*c*)pyrimidine-2-sulfonamide; *N*-(2,6-difluorophenyl)-8-fluoro-5-methoxy-[1,2,4]triazolo(1,5-*c*)pyrimidine-2-sulfonamide; 4-[(3,4-dihydro-4-methoxy-5,8-dimethyl-1,1-dioxido-2*H*-1-benzothiopyran-6-yl)carbonyl]-1-ethyl-1*H*-pyrazol-5-yl ethanesulfonate; methyl 2-[[[[(4-methoxy-6-methyl-1,3,5-triazin-2-yl)amino]carbonyl]amino]sulfonyl]-4-methylbenzoate; 4,5-dihydro-3-methoxy-4-methyl-5-oxo-*N*-[[2-(trifluoromethoxy)phenyl]sulfonyl)-1*H*-1,2,4-triazole-1-carboxamide; 1,1-dimethyl-2-oxo-2-(2-propenyloxy)ethyl 2-chloro-5-[3,6-dihydro-3-methyl-2,6-dioxo-4-(trifluoromethyl)-1(2*H*)pyrimidinyl]benzoate

Preferred is a formulation where the herbicide is a sulfonylurea, a porphyrin biosynthesis inhibitor, a 4-hydroxyphenyl-pyruvate-dioxygenase inhibitor, a phosphonic acid or its salt, or a mixture of one or more of the foregoing. More preferred herbicides include: rimsulfuron, thifensulfuron methyl, nicosulfuron, (2,3-dihydro-5,8-dimethyl-1,1-dioxidospiro[4*H*-1-benzothiopyran-4,2'-[1,3]dioxolan]-6-yl)(1-ethyl-5-hydroxy-1*H*-pyrazol-4-yl)methanone sodium salt, 2-[(2,3-dihydro-5,8-dimethyl-1,1-dioxidospiro[4*H*-1-benzothiopyran-4,2'-[1,3] dioxolan)-6-yl)carbonyl]-1,3-cyclohexanedione ion(1-), potassium, (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide, metsulfuron methyl, tribenuron methyl, flupyrsulfuron methyl, and glyphosate acid and its various salts; and mixtures thereof.

The compositions of this invention may include additives such as safeners, other surfactants, drying agents and dispersants, anti-caking agents, anti-foaming agents, wetting agents, chemical stabilizers and diluents. One skilled in the art would understand the purpose and selection of these additives.

Safeners include but are not limited to: benoxacor, dichlormid, dicyclonon, fenchlorazole-ethyl, furilazole and oxabetrinil, which may decrease the phytotoxicity of formulations to certain crops.

Drying agents/dispersants may be water-soluble or water-insoluble. Water-soluble drying agents include but are not limited to sodium, calcium and ammonium salts of ligninsulfonates (optionally polyethoxylated); salts of maleic anhydride copolymers, salts of polyacrylic acids, salts of condensed phenolsulfonic acids, salts of the napthalene sulfonate-formaldehyde condensates, polyvinylpyrrolidone, polyvinyl-alcohol, polyethylene oxide, and co-polymers of these. Water-insoluble drying agents include but are not limited to clays, synthetic and diatomaceous silicas, calcium and magnesium silicates, titanium dioxide, and charcoal. Useful levels include up to about 70% by weight.

Wetting agents include but are not limited to alkyl sulfosuccinates, taurates, alkyl sulfate and phosphate esters, acetylenic diols, ethoxyfluorinated alcohols, ethoxylated silicones and alkyl phenol ethoxylates, as well as organic sulfonates and alcohol ethoxylates. If additional wetting agent is needed, useful levels include up to about 10% by weight.

Anticaking agents to prevent clumping include but are not limited to sodium and ammonium phosphates, sodium acetate, sodium metasilicate, magnesium, zinc and calcium sulfates, magnesium hydroxide, (all optionally as hydrates), anhydrous calcium chloride, molecular sieves, sodium alkylsulfosuccinates, calcium and barium oxides. If anticaking agent is needed, useful levels include up to about 10% by weight.

Chemical stabilizers to prevent decomposition of active ingredient during storage include but are not limited to sulfates of alkaline earths and transition metals such as magnesium, zinc, aluminum and iron; lithium, sodium and potassium phosphates; calcium chloride and oxide; and, boric anhydride. If chemical stabilizer is needed, useful levels include up to about 10% by weight.

Diluents may be water-soluble or water-insoluble. The water-soluble diluents may be salts, surfactants or carbohydrates which dissolve rapidly in water; non-limiting examples include sulfates of sodium, potassium, magnesium and zinc, sodium and potassium chloride, gelatin, urea, sugar, sorbitol, sodium benzoate, lactose, and alkali metal and alkali earth phosphates. Water-insoluble diluents include but are not limited to starch modified starch, cyclodextrin, aluminum, calcium and zinc oxide, calcium and magnesium carbonate, sodium, potassium, calcium and barium sulfate. Water-soluble diluents are preferred. If diluent is needed, levels up to about 40% by weight may be included.

Anti-foaming agents include but are not limited to stearates, silicones, and ethoxylates of HLB (Hydrophobic/Lipophilic Balance) values less than about 5.

The preferred formulations of this invention are dry formulations including dusts, powders, granules, pellets, tablets, films, and the like which can be water-dispersible ("wettable") or water-soluble. Most preferred are granule or pellet type formulations. Conventional granulation methods for preparing granule compositions involve (1) water-spraying in fluidized bed or pan granulation equipment, (2) spray-drying, (3) extrusion of a water-wet paste, (4) dry compaction or (5) melt extrusion.

The following examples illustrate specific embodiments within the broader scope of the invention.

The following materials are referred to in the description or are used in the preparation of formulations in the examples.

| Trade Name | Chemical description | Supplier, address |
|---|---|---|
| Empilan ® KM20 | C (carbon)16 C18 20 EO (Ethylene Oxide), Fatty alcohol | Albrigth and Wilson,Saint Mihiel, 55300 France. |
| Empilan ® KM25 | C16 C18 25 EO, Fatty alcohol | Albrigth and Wilson,Saint Mihiel, 55300 France. |
| Brij ® 78 | C18 20EO, Fatty alcohol | ICI, Everberg, 3078 Belgium |
| Atlas ® G4938 | C16 C18 20 EO, Fatty alcohol | ICI, Everberg, 3078 Belgium |
| Atlas ® G4940 | C16 C18 30 EO, Fatty alcohol | ICI, Everberg, 3078 Belgium |
| Unithox ® 360 | C24 13 EO, Fatty alcohol | Baker Petrolite, Tulsa , Oklahoma, USA. |
| Mergital ®ST30 | C18 30 EO, Fatty acid | Sidobre Sinnova, St Fargeau-Ponthierry, 77981 France |
| Rolfor ® 24 | C22 20 EO, Fatty alcohol | Lamberti, Gallarate, 21013 Italy |
| Soprophor ® K202 | C12 C15 9EO, Fatty alcohol | Rodhia Chimie, Courbevoie, 92400 France |
| Geropon ® Sil 72 | Modified Silica | Rodhia Chimie, Courbevoie, 92400 France |
| Rhodasurf ® M30 | C12 30 EO, Fatty alcohol | Rodhia Chimie, Courbevoie, 92400 France |
| Aerosol ® OS | Na Di isopropyl Naphtalene sulfonate | Cytec Industries, Rungis, 94578 France |
| Aerosol ® OTB | Na Dioctyl Sulfo succinate | Cytec Industries, Rungis, 94578 France |
| Genapol ® 26L98 | C12 C16 12 EO | Clariant S.A, Lyon, 69530 France |
| Urea | H₂NCONH₂ | Sigma Aldrich, L'Isle D'abeau Chesnes, 38297 France |
| Talc | Magnesium Silicate | Sigma Aldrich, L'Isle D'abeau Chesnes, 38297 France |
| Foamaster ® Soap L | Tallowate anti foam | Sidobre Sinnova, St Fargeau-Ponthierry, 77981 France |
| Polyfon ® F | Sodium Ligno sulfonate | Westvaco Europe, Bruxelles, Belgium |
| Sugar | C₁₂H₂₂O₁₁ | Generale Sucriere, Paris, 75008 France |
| Barden Clay | Aluminum Silicate | J M Huber Corporation, Macon, 31298 USA |

SCS 4825,4822,4823,5053,5045,4707, 5043, 5044, 4511 are EXPERIMENTAL CODES of surfactants suppled by ICI, Everberg, 3078 Belgium.

### EXAMPLE 1

Evaluation of the adjuvants was made, in the greenhouse, by mixing the adjuvant with 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium plus thifensulfuron methyl herbicides and spraying the resulting solution at a rate of 20 + 1.5 g/ha (grams of active ingredient per hectare) 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium plus thifensulfuron methyl respectively in a spray volume of 280 L/ha, on *Polygonum lapathifolium* (POLLA) and *Stellaria media* (STEME). Surfactants were applied at a concentration of 0.02% or 0.1% by weight (if the surfactant is dry) or by volume (if the surfactant is a liquid) of surfactant per volume of spray solution. The reference adjuvant Scoil® was applied at a concentration of 0.2% or 1% per volume of spray solution. Three replications were made of each treatment. Weed control was visually assessed 27 days after treatment by evaluating the percent growth reduction, using a 0 to 100% scale where 0% equals no control, and 100% equals death of the weed.

| Weed : | | POLLA | STEME |
|---|---|---|---|
| | | | |

| Product | Surfactant | MEAN | MEAN |
|---|---|---|---|
| Name | Concentration | 27 DAY | 27 DAY |
| | | | |
| Herbicides + *Scoil*® | 1% | 99 | 92 |
| Herbicides + *Scoil*® | 0.2% | 87 | 86 |
| Herbicides + Empilan® KM20 | 0.1% | 100 | 94 |
| Herbicides + Empilan® KM20 | 0.02% | 97 | 96 |
| Herbicides + SCS4822 | 0.1% | 99 | 93 |
| Herbicides + SCS4822 | 0.02% | 92 | 93 |
| Herbicides + SCS4825 | 0.1% | 100 | 93 |
| Herbicides + SCS4825 | 0.02% | 98 | 92 |
| Herbicides + SCS4707 | 0.1% | 95 | 90 |
| Herbicides + SCS4707 | 0.02% | 83 | 81 |
| Herbicides + SCS5053 | 0.1% | 100 | 94 |
| Herbicides + SCS5053 | 0.02% | 99 | 94 |
| Herbicides + SCS5043 | 0.1% | 99 | 91 |
| Herbicides + SCS5043 | 0.02% | 92 | 91 |
| Herbicides + SCS5044 | 0.1% | 100 | 93 |
| Herbicides + SCS5044 | 0.02% | 98 | 91 |
| Herbicides + SCS5045 | 0.1% | 99 | 95 |
| Herbicides + SCS5045 | 0.02% | 96 | 92 |
| Herbicides + Rolfor® B24 | 0.1% | 98 | 94 |
| Herbicides + Rolfor® B24 | 0.02% | 99 | 92 |

The reference adjuvant *Scoil*® is a modified vegetable oil concentrate (mixture of methylated seed oil and surfactant emulsifiers) sold by Agsco, Inc., Mill Road, Grand Forks, ND 58206, USA.

### EXAMPLE 2a

Evaluation of the adjuvants was made, in the greenhouse, by mixing the adjuvant with (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus thifensulfuron methyl herbicides and spraying the resulting solution at a rate of 3.3 + 1.0 g/ha (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus thifensulfuron methyl respectively in a spray volume of 280 L/ha on *Chenopodium album* (CHEAL) and *Polygonum lapathifolium* (POLLA). Surfactants were applied at a concentration of 0.02% or 0.1% by weight (if the surfactant is dry) or by volume (if the surfactant is a liquid) of surfactant per volume of spray solution.

Three replications were made of each treatment. Weed control was visually assessed 25 days after treatment by evaluating the percent growth reduction, using a 0 to 100% scale where 0% equals no control, and 100% equals death of the weed.

| Weed : | | CHEAL | POLLA |
|---|---|---|---|
| Product | Surfactant | MEAN | MEAN |
| Name | Concentration | 25 DAY | 25 DAY |
| | | | |
| Herbicides + *Trend*® *90* | 0.1% | 98 | 97 |
| Herbicides + *Trend*® *90* | 0.02% | 94 | 92 |
| Herbicides + SC4822 | 0.1% | 96 | 100 |
| Herbicides + SC4822 | 0.02% | 96 | 96 |
| Herbicides + Rolfor® B24 | 0.1% | 95 | 100 |
| Herbicides + Rolfor® B24 | 0.02% | 97 | 99 |
| Herbicides + (SC4825+OTB 50:50) | 0.1% | 96 | 100 |
| Herbicides + (SC4825+OTB 50:50) | 0.02% | 88 | 100 |
| Herbicides + (SC4825+OTB 25:75) | 0.1% | 96 | 100 |
| Herbicides + (SC4825+OTB 25:75) | 0.02% | 96 | 94 |
| Herbicides + (SC4825+OTB 75:25) | 0.1% | 95 | 99 |
| Herbicides + (SC4825+OTB 75:25) | 0.02% | 89 | 99 |
| Herbicides + Soprophor® K202 | 0.1% | 98 | 100 |
| Herbicides + Soprophor® K202 | 0.02% | 98 | 99 |
| Herbicides + Rhodasurf® M30 | 0.1% | 98 | 98 |
| Herbicides + Rhodasurf® M30 | 0.02% | 97 | 99 |

The reference surfactant *Trend*® 90 is a 90% nonionic surfactant sold by Du Pont de Nemours (France) S. A., 137 rue de l'Université, 75334 Paris, France.

### EXAMPLE 2b

Evaluation of the adjuvants was made, in the greenhouse, by mixing the adjuvant with (6*S-cis*)-1-chloro-*N*-[2-chloro-4-fluoro-5-(6-fluorotetrahydro-1,3-dioxo-1*H*-pyrrolo[1,2-*c*]imidazo-2(3*H*)-yl)phenyl]methanesulfonamide plus thifensulfuron methyl herbicides and spraying the resulting solution at a rate of 3.3 + 1.0 g/ha (6*S-cis*)-1-chloro-*N*-[2-chloro-4-fluoro-5-(6-fluorotetrahydro-1,3-dioxo-1*H*-pyrrolo[1,2-*c*]imidazol-2(3*H*]-yl)phenyl]methanesulfonamide plus thifensulfuron methyl in a spray volume of 280 L/ha on *Chenopodium album* (CHEAL) and *Polygonum lapathifolium* (POLLA). Surfactants were applied at a concentration of 0.02% or 0.1% by weight (if the surfactant is dry) or by volume (if the surfactant is a liquid) of surfactant per volume of spray solution.

Three replications were made of each treatment. Weed control was visually assessed 21 days after treatment by evaluating the percent growth reduction, using a 0 to 100% scale where 0% equals no control and 100% equals death of the weed.

| Weed : | | CHEAL | POLLA |
|---|---|---|---|
| Product | Surfactant | MEAN | MEAN |
| Name | Concentration | 21 DAY | 21 DAY |
| | | | |
| Herbicides + *Trend*® *90* | 0.1% | 88 | 89 |
| Herbicides + *Trend*® *90* | 0.02% | 79 | 61 |
| Herbicides + Genapol® 26L98 | 0.1% | 94 | 98 |
| Herbicides + Genapol® 26L98 | 0.02% | 92 | 78 |
| Herbicides + Empilan® KM20 | 0.1% | 98 | 100 |
| Herbicides + Empilan® KM20 | 0.02% | 87 | 93 |
| Herbicides + SCS4825 | 0.1% | 95 | 98 |
| Herbicides + SCS4825 | 0.02% | 85 | 91 |
| Herbicides + SCS4822 | 0.1% | 96 | 100 |
| Herbicides + SCS4822 | 0.02% | 90 | 90 |
| Herbicides + SCS5043 | 0.1% | 96 | 99 |
| Herbicides + SCS5043 | 0.02% | 86 | 78 |
| Herbicides + SCS5053 | 0.1% | 91 | 99 |
| Herbicides + SCS5053 | 0.02% | 84 | 95 |

The reference surfactant *Trend*® 90 is a 90% nonionic surfactant sold by Du Pont de Nemours (France) S. A., 137 rue de l'Université, 75334 Paris, France.

### EXAMPLE 2c

Evaluation of the adjuvants was made, in the greenhouse, by mixing the adjuvant with (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus thifensulfuron methyl herbicides and spraying the resulting solution at a rate of 5 + 1.5 g/ha (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus thifensulfuron methyl in a spray volume of 280 L/ha on *Chenopodium album* (CHEAL). Surfactants were applied at a concentration of 0.02% or 0.1% by weight (if the surfactant is dry) or by volume (if the surfactant is a liquid) of surfactant per volume of spray solution. Three replications were made of each treatment. Weed control was visually assessed 22 days after treatment by evaluating the percent growth reduction, using a 0 to 100% scale where 0% equals no control, and 100% equals death of the weed.

| Weed : | | CHEAL |
|---|---|---|
| | Surfactant | MEAN |
| Name | Concentration | 22 DAY |
| | | |
| Herbicides + *Trend*® *90* | 0.1% | 85 |
| Herbicides + *Trend*® *90* | 0.02% | 82 |
| Herbicides + Atlas G® 4938 | 0.1% | 90 |
| Herbicides + Atlas G® 4938 | 0.02% | 88 |
| Herbicides + SCS4822 | 0.1% | 88 |
| Herbicides + SCS4822 | 0.02% | 82 |
| Herbicides + Atlas G® 4940 | 0.1% | 91 |
| Herbicides + Atlas G® 4940 | 0.02% | 82 |
| Herbicides + SCS4823 | 0.1% | 91 |
| Herbicides + SCS4823 | 0.02% | 84 |
| Herbicides + SCS4825 | 0.1% | 91 |
| Herbicides + SCS4825 | 0.02% | 86 |
| Herbicides + SCS4707 | 0.1% | 90 |
| Herbicides + SCS4707 | 0.02% | 81 |
| Herbicides + SCS4511 | 0.1% | 90 |
| Herbicides + SCS4511 | 0.02% | 88 |

The reference surfactant *Trend*® 90 is a 90% nonionic surfactant sold by Du Pont de Nemours (France) S. A., 137 rue de l'Université, 75334 Paris, France.

### EXAMPLE 2d

Evaluation of the adjuvants was made, in the greenhouse, by mixing the adjuvant with (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus thifensulfuron methyl herbicides and spraying the resulting solution at a rate of 3.3 + 1.0 g/ha (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus thifensulfuron methyl in a spray volume of 280 L/ha on *Chenopodium album* (CHEAL). Surfactants were applied at a concentration of 0.02% or 0.1% by weight (if the surfactant is dry) or by volume (if the surfactant is a liquid) of surfactant per volume of spray solution. Three replications were made of each treatment. Weed control was visually assessed 21 days after treatment by evaluating the percent growth reduction, using a 0 to 100% scale where 0% equals no control, and 100% equals death of the weed.

| Weed : | | CHEAL |
|---|---|---|
| Product | Surfactant | MEAN |
| Name | Concentration | 21 DAY |
| | | |
| Herbicides + *Trend*® *90* | 0.1% | 82 |
| Herbicides + *Trend*® *90* | 0.02% | 76 |
| Herbicides + OTB & SCS4825 | 0.1% | 95 |
| Herbicides + OTB & SCS4825 | 0.02% | 75 |
| Herbicides + SCS4825 | 0.1% | 95 |
| Herbicides + SCS4825 | 0.02% | 86 |
| Herbicides + SCS4822 | 0.1% | 92 |
| Herbicides + SCS4822 | 0.02% | 94 |
| Herbicides + SCS5045 | 0.1% | 82 |
| Herbicides + SCS5045 | 0.02% | 80 |
| Herbicides + SCS5043 | 0.1% | 94 |
| Herbicides + SCS5043 | 0.02% | 85 |
| Herbicides + SCS5044 | 0.1% | 86 |
| Herbicides + SCS5044 | 0.02% | 78 |
| Herbicides + SCS3730 | 0.1% | 87 |
| Herbicides + SCS3730 | 0.02% | 82 |
| Herbicides + SCS5053 | 0.1% | 82 |
| Herbicides + SCS5053 | 0.02% | 72 |

The reference surfactant *Trend*® 90 is a 90% nonionic surfactant sold by Du Pont de Nemours (France) S. A., 137 rue de l'Université, 75334 Paris, France.

### EXAMPLE 3a

Evaluation of the adjuvants was made, in the greenhouse, by mixing the adjuvant with 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium plus thifensulfuron methyl plus rimsulfuron herbicides and spraying the resulting solution at a rate of 10 + 1 + 5 g/ha 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium plus thifensulfuron methyl plus rimsulfuron in a spray volume of 280 L/ha on *Setaria viridis* (SETVI). Surfactants were applied at a concentration of 0.02% or 0.1% by weight (if the surfactant is dry) or by volume (if the surfactant is a liquid) of surfactant per volume of spray solution. The reference adjuvant Scoil® was applied at a concentration of 0.2% or 1% per volume of spray solution. Three replications were made of each treatment. Weed control was visually assessed 26 days after treatment by evaluating the percent growth reduction, using a 0 to 100% scale where 0% equals no control, and 100% equals death of the weed.

| Weed : | | SETVI |
|---|---|---|
| Product | Surfactant | MEAN |
| Name | Concentration | 26 DAY |
| | | |
| Herbicides + *Scoil®* | 1% | 74 |
| Herbicides + *Scoil*® | 0.2% | 75 |
| Herbicides + Empilan® KM20 | 0.1% | 79 |
| Herbicides + Empilan® KM20 | 0.02% | 79 |
| Herbicides + SCS4825 | 0.1% | 89 |
| Herbicides + SCS4825 | 0.02% | 76 |
| Herbicides + SCS4707 | 0.1% | 80 |
| Herbicides + SCS4707 | 0.02% | 79 |
| Herbicides + 4825/4707(1:1) | (0.05+0.05%) | 83 |
| Herbicides + 4825/4701 (1:1) | (0.02+0.02%) | 80 |
| Herbicides + 4825/4707 (1:2) | (0.02+0.05%) | 85 |
| Herbicides + 4825/4707 (2:1) | (0.05+0.02%) | 80 |
| Herbicides + Empilan® KM25 | 0.1% | 82 |
| Herbicides + Empilan® KM25 | 0.02% | 76 |

The reference adjuvant *Scoil*® is a modified vegetable oil concentrate (mixture of methylated seed oil and surfactant emulsifiers) sold by Agsco, Inc., Mill Road. Grand Forks, ND 58206, USA.

### EXAMPLE 3b

Evaluation of the adjuvants was made, in the greenhouse, by mixing the adjuvant with 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium plus thifensulfuron methyl plus rimsulfuron herbicides and spraying the resulting solution at a rate of 5 + 1 + 5 g/ha 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium plus thifensulfuron methyl plus rimsulfuron in a spray volume of 280 L/ha on *Setaria viridis* (SETVI) and *Chenopodium album* (CHEAL). Surfactants were applied at a concentration of 0.02% or 0.1% by weight (if the surfactant is dry) or by volume (if the surfactant is a liquid) of surfactant per volume of spray solution. The reference adjuvant Scoil® was applied at a concentration of 0.2% or 1% per volume of spray solution. Three replications were made of each treatment. Weed control was visually assessed 26 days after treatment by evaluating the percent growth reduction, using a 0 to 100% scale where 0% equals no control, and 100% equals death of the weed.

| Weed : | | SETVI | CHEAL |
|---|---|---|---|
| Product | Surfactant | MEAN | MEAN |
| Name | Concentration | 26 DAY | 26 DAY |
| | | | |
| Herbicides + *Scoil*® | 1% | 68 | 88 |
| Herbicides + *Scoil*® | 0.2% | 66 | 75 |
| Herbicides + SCS4825 | 0.1% | 71 | 81 |
| Herbicides + SCS4825 | 0.02% | 71 | 78 |
| Herbicides + SCS4822 | 0.1% | 69 | 79 |
| Herbicides + SCS4822 | 0.02% | 71 | 90 |
| Herbicides + SCS4707 | 0.02% | 76 | 88 |
| Herbicides + 4825/4707(1:1) | (0.05+0.05%) | 72 | 81 |
| Herbicides + 4822/4707(1:1) | (0.05+0.05%) | 80 | 94 |
| Herbicides + Empilan® KM25 + Unithox® | (0.06+0.03%) | 75 | 93 |
| Herbicides + Empilan® KM25 + Unithox® | (0.02+0.01%) | 72 | 79 |
| Herbicides + SCS5053 | 0.1% | 78 | 96 |
| Herbicides + SCS5053 | 0.02% | 72 | 89 |
| Herbicides + SCS5045 | 0.1% | 79 | 94 |
| Herbicides + SCS5045 | 0.02% | 68 | 91 |
| Herbicides + SCS5044 | 0.1% | 72 | 94 |
| Herbicides + SCS5044 | 0.02% | 70 | 85 |
| Herbicides + SCS5043 | 0.1% | 76 | 89 |
| Herbicides + SCS5043 | 0.02% | 71 | 86 |
| Herbicides + Soprophor® K202 | 0.1% | 76 | 93 |
| Herbicides + Soprophor® K202 | 0.02% | 74 | 94 |
| Herbicides + Empilan® KM20 | 0.01% | 71 | 94 |
| Herbicides + Empilan® KM20 | 0.02% | 68 | 90 |

The reference adjuvant *Scoil*® is a modified vegetable oil concentrate (mixture of methylated seed oil and surfactant emulsifiers) sold by Agsco, Inc., Mill Road, Grand Forks, ND 58206, USA.

### EXAMPLE 4

Evaluation of the adjuvants was made by mixing the adjuvant with (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus rimsulfuron herbicides and spraying the resulting solution at a rate of 5 + 5 g/ha (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide plus rimsulfuron in a spray volume of 280 L/ha on *Echinochloa crus-galli* (ECHCG) and *Polygonum lapathifolium* (POLLA). Surfactants were applied at a concentration of 0.02% or 0.1% by weight (if the surfactant is dry) or by volume (if the surfactant is a liquid) of surfactant per volume of spray solution. Three replications were made of each treatment. Weed control was visually assessed 21 days after treatment by evaluating the percent growth reduction, using a 0 to 100% scale where 0% equals no control, and 100% equals death of the weed

| Weed : | | ECHCG | POLLA |
|---|---|---|---|
| Product | Surfactant | MEAN | MEAN |
| Name | Concentration | 21 DAY | 21 DAY |
| | | | |
| Herbicides + *Trend*® *90* | 0.1% | 88 | 100 |
| Herbicides + *Trend*® *90* | 0.05% | 77 | 92 |
| Herbicides + Genapol® 26L98 | 0.1% | 91 | 99 |
| Herbicides + Genapol® 26L98 | 0.05% | 91 | 100 |
| Herbicides + SCS4823 | 0.1% | 82 | 99 |
| Herbicides + SCS4823 | 0.05% | 78 | 100 |
| Herbicides + SCS4825 | 0.1% | 81 | 100 |
| Herbicides + SCS4825 | 0.05% | 77 | 100 |
| Herbicides + SCS4707 | 0.1% | 94 | 100 |
| Herbicides + SCS4707 | 0.05% | 84 | 99 |
| Herbicides + SCS4511 | 0.1% | 79 | 100 |
| Herbicides + SCS4511 | 0.05% | 75 | 100 |

The reference surfactant *Trend*® 90 is a 90% nonionic surfactant sold by Du Pont de Nemours (France) S. A., 137 rue de l'Université, 75334 Paris, France.

### EXAMPLE 5

Evaluation of SCS5045 surfactant was made by mixing the surfactant with tribenuron methyl herbicide and spraying the resulting solution at a rate of 5.625 to 45 g/ha tribenuron methyl in a spray volume of 300 L/ha on *Viola arvensis* (VIOAR) and *Veronica agrestis* (VERAG). Surfactants were applied at a concentration of 0.1% by weight (if the surfactant is dry) or by volume (if the surfactant is a liquid) of surfactant per volume of spray solution. Three replications were made of each treatment. Weed control was visually assessed 70 days after treatment by evaluating the percent growth reduction, using a 0 to 100% scale where 0% equals no control, and 100% equals death of the weed.

| Product | Surfactant | Rate | % control | |
|---|---|---|---|---|
| | | g ai/ha | VIOAR | VERAG |
| Tribenuron methyl | | 5.625 | 27 | 47 |
| Tribenuron methyl | | 11.25 | 75 | 60 |
| Tribenuron methyl | | 22.5 | 80 | 63 |
| Tribenuron methyl | | 45 | 99 | 87 |
| Tribenuron methyl | SCS 5045 | 5.625 | 47 | 75 |
| Tribenuron methyl | SCS 5045 | 11.25 | 80 | 75 |
| Tribenuron methyl | SCS 5045 | 22.5 | 100 | 78 |
| Tribenuron methyl | SCS 5045 | 45 | 100 | 83 |
| Tribenuron methyl | *Trend*® 90 | 22.5 | 97 | 63 |

The reference surfactant *Trend*® 90 is a 90% nonionic surfactant sold by Du Pont de Nemours (France) S. A., 137 rue de l'Université, 75334 Paris, France.

### EXAMPLE 6

Evaluation of SCS5045 surfactant was made, in the field by mixing the surfactant with sulfosulfuron herbicide and spraying the resulting solution at a rate of 11.25 to 45 g /ha sulfosulfuron in a spray volume of 300 L/ha on *Alopecurus myosuroides* (ALOMY). Surfactants were applied at a concentration of 0.1 % by weight of SC5045 or 0.1 % by volume of *Trend*® 90 per volume of spray solution. Three replications were made of each treatment. Weed control was visually assessed 60 days after treatment by evaluating the percent growth reduction, using a 0 to 100% scale where 0% equals no control, and 100% equals death of the weed.

The number of ALOMY heads per m² was also counted 85 days after treatment.

| | Product | Surfactant | Rate | % control | Heads/m² |
|---|---|---|---|---|---|
| | | | g herbicide /ha | ALOMY | ALOMY |
| 1 | Sulfosulfuron | | 11.25 | 33 | 209 |
| 2 | Sulfosulfuron | | 22.5 | 47 | 76 |
| 3 | Sulfosulfuron | | 33.75 | 60 | 25 |
| 4 | Sulfosulfuron | | 45 | 77 | 6 |
| 5 | Sulfosulfuron | SCS 5045 | 11.25 | 50 | 49 |
| 6 | Sulfosulfuron | SCS 5045 | 22.5 | 58 | 33 |
| 7 | Sulfosulfuron | SCS 5045 | 33.75 | 72 | 23 |
| 8 | Sulfosulfuron | SCS 5045 | 45 | 80 | 3 |
| 9 | *Sulfosulfuron* | *Trend*® 90 | 33.75 | 73 | 16 |
| 10 | Untreated | | -- | | 400 |

The reference surfactant *Trend*® 90 is a 90% nonionic surfactant sold by Du Pont de Nemours (France) S. A., 137 rue de l'Université, 75334 Paris, France.

### EXAMPLE 7

Evaluation of SCS5045 surfactant was made, in the field by mixing the surfactant with metsulfuron methyl herbicide and spraying the resulting solution at a rate of 5.625 to 45 g/ha metsulfuron methyl in a spray volume of 300 L/ha on *Veronica hederifolia* (VERHE). Surfactants were applied at a concentration of 0.1% by weight (if the surfactant is dry) or by volume (if the surfactant is a liquid) of surfactant per volume of spray solution. Three replications were made of each treatment. Weed control was visually assessed 50 days after treatment by evaluating the percent growth reduction, using a 0 to 100% scale where 0% equals no control, and 100% equals death of the weed.

| | Product | Surfactant | g herbicide /ha | VERHE |
|---|---|---|---|---|
| 1 | T6376 | | 5.625 | 33 |
| 2 | T6376 | | 11.25 | 33 |
| 3 | T6376 | | 22.5 | 52 |
| 4 | T6376 | | 45 | 100 |
| 5 | T6376 | SCS 5045 | 5.625 | 40 |
| 6 | T6376 | SCS 5045 | 11.25 | 87 |
| 7 | T6376 | SCS 5045 | 22.5 | 88 |
| 8 | T6376 | SCS 5045 | 45 | 98 |
| *9* | *T6376* | *Trend*® | 22.5 | 55 |

The reference surfactant *Trend*® 90 is a 90% nonionic surfactant sold by Du Pont de Nemours (France) S. A., 137 rue de l'Université, 75334 Paris, France.

### EXAMPLE 8

Evaluation of the adjuvants was made, in the field by mixing the adjuvant with flupyrsulfuron methyl herbicide and spraying the resulting solution at a rate of 2.5 to 20 g/ha flupyrsulfuron methyl in a spray volume of 300 L/ha on *Alopecurus myosuroides* (ALOMY). Surfactants were applied at a concentration of 0.1 % by weight of SC5045 or 0.1 % by volume of *Trend*® *90* per volume of spray solution. Three replications were made of each treatment. Weed control was visually assessed 60 days after treatment by evaluating the percent growth reduction, using a 0 to 100% scale where 0% equals no control, and 100% equals death of the weed and by counting the number of ALOMY heads per m², at 85 days.

| | Product | Surfactant | Rate | % control | Heads/m² |
|---|---|---|---|---|---|
| | | | g herbicide /ha | ALOMY | ALOMY |
| 1 | KE459 | | 2.5 | 63 | 224 |
| 2 | KE459 | | 5 | 73 | 164 |
| 3 | KE459 | | 10 | 77 | 16 |
| 4 | KE459 | | 20 | 88 | 8 |
| 5 | KE459 | SCS 5045 | 2.5 | 80 | 38 |
| 6 | KE459 | SCS 5045 | 5 | 87 | 8 |
| 7 | KE459 | SCS 5045 | 10 | 92 | 6 |
| 8 | KE459 | SCS 5045 | 20 | 97 | 1 |
| 9 | KE459 | *Trend*® 90 | 10 | 91 | 10 |
| 10 | Untreated | | | | 784 |

*Trend*® 90 surfactant is 90% nonionic surfactant sold by Du Pont de Nemours (France) S. A., 137 rue de l'Université, 75334 Paris, France

### EXAMPLE 9

A dry high concentration water-soluble granule formulation was prepared based upon a water-soluble drying agent/dispersant. These granules can subsequently be blended with herbicide dispersible granule formulations to produce herbicide/surfactant blends in all desired proportions.

| | |
|---|---|
| Reax® 85A (sodium lignin sulfonate produced by Westvaco) | 50% |
| Empilan® KM25 (Cetostearilic alcohol with 25 ethylene oxide moles) | 50% |

The lignosulfonate and fatty alcohol surfactant were dissolved in water and then dried in a vacuum oven. Resultant cake was milled to a powder, moistened, extruded, dried and broken to desired granule length. One skilled in the art would recognize that on a large scale it may be more advantageous to spray dry the aqueous solution to obtain dry powder directly. Other water-soluble polymers such as acrylic-based, naphthalene-based, and pyrrolidone-based polymers may be used as drying agents or carriers for these fatty alcohols.

### EXAMPLE 10

A dry high concentration water-dispersible granule formulation can be prepared based upon a water-insoluble drying agent. These granules can subsequently be blended with herbicide water-dispersible granule formulations to produce herbicide/surfactant blends in all desired proportions.

| | |
|---|---|
| Brij® 78 (stearilic alcohol with 20 ethylene oxide moles) | 45% |
| Geropon Sil® 72 (a modified silica manufactured by Rhone Poulenc) | 45% |
| Aerosol® OTB(dioctylsulfosuccinate wetting agent manufactured by Cytec Industries, Inc.) | 3% |
| Foamaster® Soap L (tallowate anti-foam made by Henkel Corp.) | 1% |
| Polyfon® F (ligno sulfonate dispersant manufactured by Westvaco) | 3% |
| Sugar (diluent manufactured by Générale Sucrière) | 3% |

Silica and alcohol surfactant are combined by high shear mixing to form a powder. Other components are added, blended and milled to finer than 150 microns. The milled powder is moistened to an extrudable paste, extruded, dried, and broken to desired length granules.

### EXAMPLE 11

A dry high concentration water-dispersible granule formulation can be prepared based upon a water-soluble drying agent. These granules can subsequently be blended with herbicide water-dispersible granule formulations to produce herbicide/surfactant blends in all desired proportions.

| | |
|---|---|
| Brij® 78 (stearilic alcohol with 20 ethylene oxide moles) | 45% |
| Urea (Sigma Aldrich) | 45% |
| Aerosol OS (di iso propyl naphtalene sulfonate wetting agent manufactured by Cytec Industries, Inc.) | 3% |
| Foamaster® Soap L (tallowate anti-foam made by Henkel Corp.) | 1% |
| Polyfon® F (ligno sulfonate dispersant manufactured by Westvaco) | 3% |
| Talc (diluent made by SPCI) | 3% |

Urea and alcohol surfactant are combined by mixing melted surfactant and powdered urea to form a powder after a mill step. One skilled in the art would recognize that on a large scale it may be more advantageous to spray dry the melted mixture to obtain dry powder directly. Other components are added, blended and milled to finer than 150 microns. The milled powder is moistened to an extrudable paste, extruded, dried, and broken to desired length granules.

### EXAMPLE 12

A dry high concentration water-dispersible granule formulation can be prepared based upon a water-soluble drying agent. These granules can subsequently be blended with herbicide water-dispersible granule formulations to produce herbicide/surfactant blends in all desired proportions.

| | |
|---|---|
| Empilan® KM25 (cetostearilic alcohol with 25 ethylene oxide moles) | 30% |
| Unithox® 360 ( C24 with 13 ethylene oxide moles) | 15% |
| Urea (Sigma Aldrich) | 45% |
| Aerosol OS (di iso propyl naphtalene sulfonate wetting agent manufactured by Cytec Industries, Inc.) | 3% |
| Foamaster® Soap L (tallowate anti-foam made by Henkel Corp.) | 1% |
| Polyfon® F (ligno sulfonate dispersant manufactured by Westvaco) | 3% |
| Talc (diluent made by SPCI) | 3% |

Urea and fatty alcohol surfactants are combined by mixing melted surfactants and powdered urea to form a powder after a mill step. One skilled in the art would recognize that on a large scale it may be more advantageous to spray dry the melted mixture to obtain dry powder directly. Other components are added, blended and milled to finer than 150 microns. The milled powder is moistened to an extrudable paste, extruded, dried, and broken to desired length granules.

### EXAMPLE 13

A dry high concentration water-dispersible granule formulation can be prepared based upon a water-soluble drying agent. These granules can subsequently be blended with herbicide water-dispersible granule formulations to produce herbicide/surfactant blends in all desired proportions.

| | |
|---|---|
| Brij 78 (stearilic alcohol with 20 ethylene oxide moles) | 45% |
| Urea (Sigma Aldrich) | 45% |
| Barden Clay (diluent made by Marcel Quarre) | 10% |

Urea and fatty alcohol surfactant are combined by mixing melted surfactant and powdered urea to form a powder after a mill step. One skilled in the art would recognize that on a large scale it may be more advantageous to spray dry the melted mixture to obtain dry powder directly. Other components are added, blended and milled to finer than 150 microns. The milled powder is moistened to an extrudable paste, extruded, dried, and broken to desired length granules.

### EXAMPLE 14

Example12 was repeated using Atlas G4838 in place of Brij® 78.

### EXAMPLE 15

Example12 was repeated using SCS 3730 in place of Brij® 78.

### EXAMPLE 16

Example12 was repeated using Synperonic® 91/6 in place of Brij® 78.

### EXAMPLE 17

Example12 was repeated using Mergital® ST 30 in place of Brij® 78.

### EXAMPLE 18

A formulation containing the solid form of the surfactant and herbicides in the same composition can be prepared with the following ingredients.

| | |
|---|---|
| SCS 4825 (Brij® 78+ Urea) | 50% |
| 2-[(2,3-dihydro-5,8-dimethyl-1,1-dioxidospiro[4*H*-1-benzothiopyran-4,2'-[1,3]dioxolan]-6-yl)carbonyl]-1,3-cyclohexanedione ion(1-), potassium | 10.7% |
| | |
| Cyclohexen-1-one S,S-dioxide potassium salt. | |
| thifensulfuron methyl | 1.6% |
| | |
| rimsulfuron | 5.3% |
| | |
| Morwet® D425 | 6.7% |
| Talc | 6.7% |
| Sugar | 19% |

The ingredients are blended, milled, moistened, extruded, dried and broken to desired granule length.

### EXAMPLE 19

The effect of adjuvants on the activity of nicosulfuron was investigated by tank mixing the adjuvants with the herbicide. Evaluation of the adjuvants was made by mixing the adjuvant with a nicosulfuron solution and spraying the resulting solution at a rate of 3.5 g/ha nicosulfuron in a spray volume of 187 L/ha on giant foxtail (*Setaria faberi*). Three replications were made of each treatment. Plants were evaluated after two weeks by measuring their green fresh weights and converting these weight by comparison to an untreated control treatment into percent control values.

| | Adjuvant Name | | | | | | |
|---|---|---|---|---|---|---|---|
| Adjuvant Conc. % w/w | *Trend*® 90 NIS | Silwet® L-77 NIS | Induce NIS | Genapol® 26-L-98 NIS | Empilan® KM25 NIS | Agridex ® COC | Scoil® MVO |
| 0.0125 | 20 | 0 | 10 | 7 | 48 | | |
| 0.025 | 43 | 0 | 8 | 26 | 65 | | 10 |
| 0.05 | 41 | 0 | 43 | 62 | 79 | 9 | 39 |
| 0.1 | 59 | 22 | 68 | 81 | 92 | 43 | 61 |
| 0.2 | 71 | 23 | 83 | 94 | 96 | 53 | 84 |
| 0.4 | 88 | 77 | 95 | 96 | 97 | 76 | 91 |
| 0.8 | 84 | 91 | 96 | 97 | 97 | 86 | 96 |
| 1.6 | | | | | | 90 | 97 |
| 0 | 0 | | | | | | |

*Trend*® 90 surfactant is 90% nonionic surfactant sold by Du Pont de Nemours (France) S. A., 137 rue de l'Universite, 75334 Paris, France. Silwet L-77® surfactant is a silicone based nonionic surfactant, a heptamethyl trisiloxane ethoxylate, sold by Witco Corp, One American Lane, Greenwich, CT 06831. Induce® 90 nonionic low foam wetter/spreader adjuvant with 90% nonionic surfactant (alkylaryl and alcohol ethoxylate surfactants) and fatty acids and 10% water said by Helena Chemicals Co., 5100 Poplar Ave., Memphis, TN 38137. Genapol® 24-L-98 surfactant is a nonionic C₁₂₋₁₆ ethoxylate sold by Rhodia Inc., Prospect Plains Road, Cranberry, NJ 08512. Empilan® KM25 surfactant is a nonionic C₁₈₋₁₈ ethoxylate sold by Albright and Wilson, Saint Mihiel, 55300 France. Agridex® nonionic spray adjuvant is a crop oil concentrate (83% paraffin base petroleum oil and 17% surfactant emulsifiers) sold by Helena Chemicals Co., 5100 Poplar Ave., Memphis, TN 38137. Scoil® is a modified vegetable oil concentrate (mixture of methylated seed oil and surfactant emulsifiers) sold by Agsco, Inc., Mill Road, Grand Forks, ND 58206.

### EXAMPLE 20

The effect of adjuvants on the activity of nicosulfuron was investigated by tank mixing the adjuvants with the herbicide. Evaluation of the adjuvants was made by mixing the adjuvant with a nicosulfuron solution and spraying the resulting solution at a rate of 3.5 g/ha nicosulfuron in a spray volume of 187 L/ha on giant foxtail (*Setaria faberi*). Four replications were made of each treatment. The experiment was repeated three times. Plants were evaluated after two weeks by measuring their green fresh weights and converting these weight by comparison to an untreated control treatment into percent control values.

| Adjuvant | | Number of Ethylene Oxide | | | | | | | |
|---|---|---|---|---|---|---|---|---|---|
| Conc. % w/w | Hydrophobe | 4 | 6 | 9 | 12 | 20 | 25 | 30 | 50 |
| | | *% Control* | | | | | | | |
| 0.04 | Nonoxynol | 16 | 9 | 43 | 40 | 59 | 30 | 49 | 50 |
| | H-(CH₂)₁₀ | 19 | 15 | 17 | | | | | |
| | H-(CH₂)₁₂ tridecyl- | | 16 | | 47 | | 73 | | 81 |
| | H-(CH₂)₁₇ | | | 81 | 87 | 88 | 87 | 87 | 81 |
| | H-(CH₂)₂₄ | | | 70 | 87 | 85 | | 29 | |
| | H-(CH₂)₃₀ | | | | 53 | | | | 25 |
| 0.2 | Nonoxynol | 20 | 60 | 88 | 91 | 91 | 81 | 86 | 67 |
| | H-(CH₂)₁₀ | 53 | 58 | 73 | | | | | |
| | H-(CH₂)₁₂ tridecyl- | | 38 | | 92 | | 93 | | 91 |
| | H-(CH₂)₁₇ | | | 91 | 95 | 96 | 95 | 95 | 92 |
| | H-(CH₂)₂₄ | | | 96 | 94 | 93 | | 48 | |
| | H-(CH₂)₃₀ | | | | 85 | | | | 42 |

| Standards | | | | | | | | | |
|---|---|---|---|---|---|---|---|---|---|
| 0.2% | *Trend*® 90 NIS | 68 | | | | | | | |
| 0.25% | Induce® NIS | 89 | | | | | | | |
| 1% | Agridex® COC | 81 | | | | | | | |
| Nicosulfuron Alone | | 2 | | | | | | | |

### EXAMPLE 21

The effect of adjuvants on the activity of the isopropylamine salt of glyphosate was investigated by tank mixing the adjuvants with the herbicide. Evaluation of the adjuvants was made by mixing the adjuvant with an herbicide solution and spraying the resulting solution at a rate of 210 g/ha isopropylamine salt of glyphosate in a spray volume of 187 L/ha on giant foxtail (*Setaria faberi*). Four replications were made of each treatment. Plants were evaluated after two weeks by measuring their green fresh weights and converting these weight by comparison to an untreated control treatment into percent control values.

| Adjuvant | | Number of Ethylene Oxide | | | | | | | |
|---|---|---|---|---|---|---|---|---|---|
| Conc. % w/w | Hydrophobe | 4 | 6 | 9 | 12 | 20 | 25 | 30 | 50 |
| | | *% Control* | | | | | | | |
| 0.04 | Nonoxynol | 35 | 51 | 68 | 86 | 84 | 88 | 95 | 91 |
| | H-(CH₂)₁₀ | 70 | 77 | 77 | | | | | |
| | H-(CH₂)₁₂ tridecyl- | | 62 | | 84 | | 91 | | 95 |
| | H-(CH₂)₁₇ | | | 93 | 95 | 93 | 98 | 96 | 94 |
| | H-(CH₂)₂₄ | | | 94 | 94 | 91 | | 90 | |
| | H-(CH₂)₃₀ | | | | 93 | | | | 93 |
| 0.2 | Nonoxynol | 34 | 34 | 71 | 85 | 92 | 91 | 98 | 91 |
| | H-(CH₂)₁₀ | 61 | 72 | 76 | | | | | |
| | H-(CH₂)₁₂ tridecyl- | | 40 | | 80 | | 96 | | 98 |
| | H-(CH₂)₁₇ | | | 97 | 95 | 98 | 99 | 99 | 99 |
| | H-(CH₂)₂₄ | | | 98 | 96 | 95 | | 89 | |
| | H-(CH₂)₃₀ | | | | 97 | | | | 91 |

| Standards | | | | | | | | | |
|---|---|---|---|---|---|---|---|---|---|
| 0.2% | Trend® 90 NIS | 64 | | | | | | | |
| 0.25% | Induce® NIS | 68 | | | | | | | |
| 1% | Agridex® COC | 56 | | | | | | | |
| Glyphosate IPA Alone | | 85 | | | | | | | |
| Roundup® Ultra Alone | | 65 | | | | | | | |

Roundup® Ultra herbicide is a commercial liquid formulation of 41% glyphosate isopropylamine sold by Monsanto Company, Lindbergh Blvd., St. Louis, MO.

### EXAMPLE 22

The effect of adjuvants on the activity of quizalofop-ethyl was investigated by tank mixing the adjuvants with the herbicide. Evaluation of the adjuvants was made by mixing the adjuvant with an herbicide solution and spraying the resulting solution at a rate of 3.5 g/ha quizalofop-ethyl in a spray volume of 187 L/ha on giant foxtail (*Setaria faberi*). Four replications were made of each treatment. The experiment was repeated two times. Plants were evaluated after two weeks by measuring their green fresh weights and converting these weight by comparison to an untreated control treatment into percent control values.

| Adjuvant | | Number of Ethylene Oxide | | | | | | | |
|---|---|---|---|---|---|---|---|---|---|
| Conc. % w/w | Hydrophobe | 4 | 6 | 9 | 12 | 20 | 25 | 30 | 50 |
| | | *% Control* | | | | | | | |
| 0.04 | Nonoxynol | 53 | 58 | 39 | 22 | 27 | 19 | 20 | 9 |
| | H-(CH₂)₁₀ | 53 | 40 | 48 | | | | | |
| | H-(CH₂)₁₂ tridecyl- | | 41 | | 52 | | 49 | | 46 |
| | H-(CH₂)₁₇ | | | 30 | 72 | 53 | 46 | 47 | 31 |
| | H-(CH₂)₂₄ | | | 65 | 54 | 40 | | 23 | |
| | H-(CH₂)₃₀ | | | | 28 | | | | 32 |
| 0.2 | Nonoxynol | 83 | 75 | 85 | 74 | 60 | 50 | 44 | 34 |
| | H-(CH₂)₁₀ | 94 | 89 | 90 | | | | | |
| | H-(CH₂)₁₂ tridecyl- | | 86 | | 92 | | 84 | | 74 |
| | H-(CH₂)₁₇ | | | 87 | 93 | 92 | 88 | 89 | 70 |
| | H-(CH₂)₂₄ | | | 94 | 93 | 89 | | 69 | |
| | H-(CH₂)₃₀ | | | | 83 | | | | 59 |

| Standards | | | | | | | | | |
|---|---|---|---|---|---|---|---|---|---|
| 0.2% | Trend® 90 NIS | 83 | | | | | | | |
| 0.25% | Induce® NIS | 86 | | | | | | | |
| 1% | Agridex® COC | 87 | | | | | | | |
| Quizalofop Ethyl Alone | | 7 | | | | | | | |

### EXAMPLE 23

The effect of adjuvants on the activity of chlorimuron ethyl was investigated by tank mixing the adjuvants with the herbicide. Evaluation of the adjuvants was made by mixing the adjuvant with an herbicide solution and spraying the resulting solution at a rate of 1.5 g/ha chlorimuron ethyl in a spray volume of 187 L/ha on velvetleaf (*Abutilon theophrastic*). Four replications were made of each treatment. Plants were evaluated after two weeks by measuring their green fresh weights and convening these weight by comparison to an untreated control treatment into percent control values.

| Adjuvant | | Number of Ethylene Oxide | | | | | | | |
|---|---|---|---|---|---|---|---|---|---|
| Conc. % w/w | Hydrophobe | 4 | 6 | 9 | 12 | 20 | 25 | 30 | 50 |
| | | *% Velvetleaf Control* | | | | | | | |
| 0.04 | Nonoxynol | 61 | 75 | 72 | 64 | 59 | 65 | 53 | 65 |
| | H-(CH₂)₁₀ | 74 | 72 | 74 | | | | | |
| | H-(CH₂)₁₂ | | 64 | | 73 | | 68 | | 61 |
| | H-(CH₂)₁₇ | | | 61 | 67 | 77 | 80 | 61 | 74 |
| | H-(CH₂)₂₄ | | | 81 | 74 | 69 | | 78 | |
| | H-(CH₂)₃₀ | | | | 77 | | | | 73 |
| 0.2 | Nonoxynol | 77 | 78 | 70 | 77 | 73 | 83 | 59 | 77 |
| | H-(CH₂)₁₀ | 82 | 84 | 79 | | | | | |
| | H-(CH₂)₁₂ | | 79 | | 82 | | 90 | | 78 |
| | H-(CH₂)₁₇ | | | 80 88 | | 83 | 84 | 80 | 80 |
| | H-(CH₂)₂₄ | | | 84 | 78 | 74 | | 76 | |
| | H-(CH₂)₃₀ | | | | 81 | | | | 80 |

| Standards | | | | | | | | | |
|---|---|---|---|---|---|---|---|---|---|
| 0.2% | Trend® 90 NIS | 82 | | | | | | | |
| 0.25% | Induce® NIS | 82 | | | | | | | |
| 1% | Agridex® COC | 79 | | | | | | | |
| Chlorimuron Alone | | 53 | | | | | | | |

### EXAMPLE 24

The effect of adjuvants on the activity of thifensulfuron methyl was investigated by tank mixing the adjuvants with the herbicide. Evaluation of the adjuvants was made by mixing the adjuvant with an herbicide solution and spraying the resulting solution at a rate of 2 g/ha thifensulfuron methyl in a spray volume of 187 L/ha on common lambsquarters (*Chenopodium album* L*.*). Four replications were made of each treatment. Plants were evaluated after two weeks by measuring their green fresh weights and converting these weight by comparison to an untreated control treatment into percent control values.

| Adjuvant | | Number of Ethylene Oxide | | | | | | | |
|---|---|---|---|---|---|---|---|---|---|
| Conc. % w/w | Hydrophobe | 4 | 6 | 9 | 12 | 20 | 25 | 30 | 50 |
| | | *% Common Lambsquarters Control* | | | | | | | |
| 0.04 | Nonoxynol | 78 | 81 | 87 | 85 | 89 | 83 | 84 | 83 |
| | H-(CH₂)₁₀ | 71 | 88 | 89 | | | | | |
| | H-(CH₂)₁₂ | | 87 | | 85 | | 87 | | 89 |
| | H-(CH₂)₁₇ | | | 88 | 85 | 92 | 87 | 88 | 85 |
| | H-(CH₂)₂₄ | | | 88 | 85 | 88 | | 84 | |
| | H-(CH₂)₃₀ | | | | 80 | | | | 84 |
| 0.2 | Nonoxynol | 85 | 90 | 90 | 91 | 92 | 90 | 90 | 88 |
| | H-(CH₂)₁₀ | 89 | 89 | 91 | | | | | |
| | H-(CH₂)₁₂ | | 87 | | 92 | | 91 | | 91 |
| | H-(CH₂)₁₇ | | | | 84 | 91 | 87 | 88 | 88 |
| | H-(CH₂)₂₄ | | | 87 | 91 | 87 | | 91 | |
| | H-(CH₂)₃₀ | | | | 90 | | | | 86 |

| Standards | | | | | | | | | |
|---|---|---|---|---|---|---|---|---|---|
| 0.2% | Trend® 90 NIS | 91 | | | | | | | |
| 0.25% | Induce® NIS | 88 | | | | | | | |
| 1% | Agridex® COC | 76 | | | | | | | |
| Thifensulfuron Alone | | 11 | | | | | | | |

### EXAMPLE 25

The effect of adjuvants on the activity of (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide was investigated by tank mixing the adjuvants with the herbicide. Evaluation of the adjuvants was made by mixing the adjuvant with an herbicide solution and spraying the resulting solution at a rate of 1.5 g/ha (6*S-cis*)-1-chloro-*N*-[2-chloro-4-fluoro-5-(6-fluorotetrahydro-1,3-dioxo-1*H*-pyrrolo[1,2-*c*]imidazol-2(3*H*)-yl)phenyl]methanesulfonamide in a spray volume of 187 L/ha on common lambsquarters (*Chenopodium album* L*.*). Four replications were made of each treatment. Plants were evaluated after two weeks by measuring their green fresh weights and convening these weight by comparison to an untreated control treatment into percent control values.

| Adjuvant | | Number of Ethylene Oxide | | | | | | | |
|---|---|---|---|---|---|---|---|---|---|
| Conc. % w/w | Hydrophobe | 4 | 6 | 9 | 12 | 20 | 25 | 30 | 50 |
| | | *% Control* | | | | | | | |
| 0.04 | Nonoxynol | 79 | 79 | 85 | 88 | 88 | 83 | 91 | 85 |
| | H-(CH₂)₁₀ | 71 | 90 | 93 | | | | | |
| | H-(CH₂)₁₂ | | 86 | | 88 | | 92 | | 91 |
| | H-(CH₂)₁₇ | | | 93 | 93 | 92 | 93 | 91 | 86 |
| | H-(CH₂)₂₄ | | | 86 | 92 | 95 | | 69 | |
| | H-(CH₂)₃₀ | | | | 84 | | | | 75 |
| 0.2 | Nonoxynol | 83 | 90 | 83 | 86 | 87 | 89 | 93 | 83 |
| | H-(CH₂)₁₀ | 89 | 94 | 90 | | | | | |
| | H-(CH₂)₁₂ | | 90 | | 83 | | 95 | | 92 |
| | H-(CH₂)₁₇ | | | 88 | 95 | 96 | 97 | 96 | 94 |
| | H-(CH₂)₂₄ | | | 92 | 88 | 92 | | 80 | |
| | H-(CH₂)₃₀ | | | | 85 | | | | 68 |

| Standards | | | | | | | | | |
|---|---|---|---|---|---|---|---|---|---|
| 0.2% | Trend® 90 NIS | 86 | | | | | | | |
| 0.25% | Induce® NIS | 87 | | | | | | | |
| 1% | Agridex® COC | 91 | | | | | | | |
| Herbicide Alone | | 44 | | | | | | | |

### EXAMPLE 26

The effect of adjuvants on the activity of 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium was investigated by tank mixing the adjuvants with the herbicide. Evaluation of the adjuvants was made by mixing the adjuvant with an herbicide solution and spraying the resulting solution at a rate of 1.5 g/ha 2-[(2,3-dihydro-5,8-dimethyl-1,1-dioxidospiro[4*H*-1-benzothiopyran-4,2'-[1,3] dioxolan]-6-yl)carbonyl]-1,3-cyclohexanedione ion(1-), potassium in a spray volume of 187 L/ha on common lambsquarters (*Chenopodium album* L.). Four replications were made of each treatment. Plants were evaluated after two weeks by measuring their green fresh weights and converting these weight by comparison to an untreated control treatment into percent control values.

| Adjuvant | | Number of Ethylene Oxide | | | | | | | |
|---|---|---|---|---|---|---|---|---|---|
| Conc. % w/w | Hydrophobe | 4 | 6 | 9 | 12 | 20 | 25 | 30 | 50 |
| | | *% Control* | | | | | | | |
| 0.04 | Nonoxynol | 21 | 19 | 40 | 48 | 62 | 45 | 77 | 56 |
| | H-(CH₂)₁₀ | 16 | 13 | 4 | | | | | |
| | H-(CH₂)₁₂ | | 22 | | 54 | | 35 | | 70 |
| | H-(CH₂)₁₇ | | | 42 | 75 | 78 | 84 | 85 | 90 |
| | H-(CH₂)₂₄ | | | 40 | 78 | 61 | | 44 | |
| | H-(CH₂)₃₀ | | | | 22 | | | | 32 |
| 0.2 | Nonoxynol | 79 | 88 | 89 | 88 | 93 | 87 | 90 | 86 |
| | H-(CH₂)₁₀ | 52 | 43 | 77 | | | | | |
| | H-(CH₂)₁₂ | | 72 | | 85 | | 90 | | 88 |
| | H-(CH₂)₁₇ | | | 82 | 80 | 95 | 90 | 90 | 88 |
| | H-(CH₂)₂₄ | | | 94 | 92 | 90 | | 59 | |
| | H-(CH₂)₃₀ | | | | 72 | | | | 56 |

| Standards | | | | | | | | | |
|---|---|---|---|---|---|---|---|---|---|
| 0.2% | Trend® 90 NIS | 84 | | | | | | | |
| 0.25% | Induce® NIS | 93 | | | | | | | |
| 1% | Agridex® COC | 82 | | | | | | | |
| Herbicide Alone | | 12 | | | | | | | |

## Claims

1. A dry herbicidal formulation, comprising:
a) one or more herbicides;
b) one or more fatty alcohol ethoxylated compounds or salts thereof; and
c) optionally one or more additives selected from the group consisting of: safeners, surfactants, oils, ammonium salts, drying agents, dispersants, wetting agents, anti-caking agents, anti-foaming agents, chemical stabilizers, and inert diluents; wherein when the formulation is diluted with water in a spray tank the concentration of the one or more fatty alcohol ethoxylated compounds or salts thereof and any other adjuvant that enhances biological activity is about 0.01 to about 0.5% of the spray volume which ranges from about 10 to about 500 liters/hectare.

2. A water-soluble or water-dispersible herbicide formulation, comprising:
a) a water-soluble or water-dispersible herbicide granule composition which comprises one or more herbicides, and optionally one or more additives selected from the group consisting of: safeners, surfactants, drying agents, dispersants, wetting agents, anti-caking agents, anti-foaming agents, chemical stabilizers, and inert diluents; and
b) a water-soluble or water-dispersible fatty alcohol ethoxylated surfactant granule composition which comprises one or more fatty alcohol ethxoylated compounds or salts thereof; and one or more additives selected from the group consisting of: safeners, surfactants, drying agents, dispersants, wetting agents, anti-caking agents, anti-foaming agents, chemical stabilizers, and inert diluents; wherein when the formulation is diluted with water in a spray tank the concentration of the one or more fatty alcohol ethoxylated compounds or salts thereof and any other adjuvant that enhances biological activity is about 0.01 to about 0.5% of the spray volume, which ranges from about 10 to about 500 liters/ha.

3. The formulation of Claim 1 or Claim 2 wherein the fatty alcohol ethoxylated compound or salts thereof is represented by the formula
R-(OCH₂CH₂)ₓ-OH
wherein: R is a linear or branched alkyl containing 8 to 26 carbon atoms and
x is 6 to 50.

4. The formulation of Claim 3 wherein R is a linear or branched alkyl containing 16 to 24 carbon atoms and x is 12 to 25.

5. The formulation of Claim 1 or 2 wherein when the formulation is diluted with water in a spray tank the concentration of the one or more fatty alcohol ethoxylated compounds or salts thereof and any other adjuvant that enhances biological activity is about 0.01 to about 0.09% of the spray volume.

6. The formulation of Claim 1 or 2 wherein the herbicide is a sulfonylurea, a porphyrin biosynthesis inhibitor, a 4-hydroxyphenyl-pyruvate-dioxygenase inhibitor, a phosphonic acid or its salt, or a mixture of one or more of the foregoing.

7. The formulation of Claim 3 wherein the herbicide is selected from the group consisting of: rimsulfuron, thifensulfuron methyl, nicosulfuron, (2,3-dihydro-5,8-dimethyl-1,1-dioxidospiro[4*H*-1-benzothiopyran-4,2'-[1,3]dioxolan]-6-yl)(1-ethyl-5-hydroxy-1*H*-pyrazol-4-yl)methanone sodium salt, 2-[(2,3-dihydro-5,8-dimethyl-1,1-dioxidospiro[4*H*-1-benzothiopyran-4,2'-[1,3] dioxolan]-6-yl)carbonyl)-1,3-cyclohexanedione ion(1-), potassium, (6*S*-*cis*)-1-chloro-*N*-[2-chloro-4-fluoro-5-(6-fluorotetrahydro-1,3-dioxo-1*H*-pyrrolo[1,2-c]imidazol-2(3*H*)-yl)phenyl]methanesulfonamide, metsulfuron methyl, tribenuron methyl, flupyrsulfuron methyl, quizalofop-ethyl, and glyphosate acid and its various salts; and mixtures thereof.

8. A method for controlling the growth of undesired vegetation, which comprises adding the formulation of Claim 1 or 2 to water and applying to the locus to be protected an effective amount of the dispersed formulation in water.

9. A method for controlling the growth of undesired vegetation, which comprises adding the formulation of Claim 3 to water and applying to the locus to be protected an effective amount of the dispersed formulation in water.

10. A method for controlling the growth of undesired vegetation, which comprises adding the formulation of Claim 4 to water and applying to the locus to be protected an effective amount of the dispersed formulation in water.

11. A method for controlling the growth of undesired vegetation, which comprises adding the formulation of Claim 5 to water and applying to the locus to be protected an effective amount of the dispersed formulation in water.

12. A method for controlling the growth of undesired vegetation, which comprises adding the formulation of Claim 6 to water and applying to the locus to be protected an effective amount of the dispersed formulation in water.
